# EUROPÄISCHE PATENTSCHRIFT

(11) **EP 3 039 202 B1**
(45) Veröffentlichungstag und Bekanntmachung des Hinweises auf die Patenterteilung: **08.08.2018**
(21) Anmeldenummer: 14735907.9
(22) Anmeldetag: 30.06.2014
(51) Int. Cl.: E04F 10/08

(54) **LAMELLENDACH**
SLAT ROOF
TOIT À LAMELLES

(30) Priorität: 29.08.2013 DE 102013109391
(43) Veröffentlichungstag der Anmeldung: 06.07.2016
(73) Patentinhaber: Grimmeisen, Jürgen, 70469 Stuttgart (DE)
(72) Erfinder: Grimmeisen, Jürgen, 70469 Stuttgart (DE)
(74) Vertreter: Herrmann, Jochen
(86) Internationale Anmeldenummer: PCT/EP2014/063829
(87) Internationale Veröffentlichungsnummer: WO 2015/028174

(56) Entgegenhaltungen:
- EP-A1- 2 839 206
- EP-A2- 0 249 919
- DE-A1- 2 624 646
- DE-A1- 3 403 920
- DE-A1- 3 640 376
- DE-A1- 3 703 587
- JP-A- H07 139 112

## Beschreibung

Die Erfindung betrifft ein Lamellendach mit Lamellen, und mit einer Stellvorrichtung zur Drehung der Lamellen um eine parallel zu ihrer Längserstreckung verlaufenden Drehachse zwischen einer geschlossenen und einer geöffneten Drehposition nach dem Oberbegriff des Anspruchs 1.

Ein derartiges Lamellendach ist aus der JP H07 139 112 A bekannt. Ferner beschreibt die EP 1 127 992 B1 ein Lamellendach mit einer Mehrzahl von parallelen Lamellen, die jeweils an ihren Querseiten um eine zu ihrer Längserstreckung parallele Achse an ortsfesten Seitenteilen zwischen einer geöffneten und einer geschlossenen Stellung schwenkbar gelagert sind, wobei die Lamellen in geschlossener Stellung jeweils mit ihrer Vorderkante die Hinterkante der davorliegenden Lamelle überdecken.

Ein solches Lamellendach bietet im geschlossenen Zustand einen Wetter- und Sonnenschutz. Durch die Dichtelemente oder die ineinander greifenden Leitsysteme wird verhindert, das Regen durch das Lamellendach dringt. Durch Drehen der Lamellen kann das Lamellendach geöffnet werden, so dass Sonnenlicht in den darunter liegenden Raum dringen kann. Durch eine entsprechende Wahl der Drehposition der Lamellen kann der Lichteinfall reguliert werden. Warme Luft kann durch die Öffnungen des Lamellendachs abgeführt und somit ein Hitzestau vermieden werden. Lamellendächer eignen sich daher bevorzugt zur Abdeckung von Terrassen und Balkonen, aber auch zur Abdeckung von umschlossenen Räumen, beispielsweise von Wintergärten, Lauben, Pergolen, Carports etc..

Nachteilig hierbei ist, dass die auftreffende Sonnenstrahlung von den Lamellen absorbiert wird und dadurch das Dach und der darunter liegende Raum aufheizt werden und dass die auftreffende Sonnenstrahlung ungenutzt zurückreflektiert wird.

Aus der DE 10 2005 047 624 A1 ist ein windsicherer Sonnenschutz mit einer Vielzahl von Lamellen bekannt, die im gegenseitigen Abstand an einer Halterung befestigt sind und an der sonnenabgewandten Unterseite einen Schatten bilden. Dabei ist es vorgesehen, dass die Lamellen schwerkraftbedingt frei nach unten hängend mit ihren sonnennahen Oberkanten an der Halterung drehbar oder biegbar gelagert sind. Entsprechend dargestellter Ausführungsvarianten der Erfindung können die Lamellen als photovoltaische Elemente zur Gewinnung von Strom aus Sonnenlicht oder als Wärmeträger-Elemente mit einem flüssigen Wärmeträgermedium zur Gewinnung von Warmwasser ausgebildet sein. Die Anordnung bietet somit keinen Wetterschutz in Form eines Daches, sondern lediglich einen Sonnenschutz. Dabei richten sich die Lamellen durch die Schwerkraft und den vorliegenden Wind selbst aus und können in ihrer Position zur Sonne nicht eingestellt werden. Die überwiegend nach unten zeigende Ausrichtung der Lamellen ist für die Nutzung von Sonnenenergie ungünstig und auch die Anordnung der Lamellen verhindert durch ihre gegenseitige Abschattung eine effektive Nutzung der Sonnenenergie.

Es ist daher Aufgabe der Erfindung, ein wetterfestes Lamellendach zur effektiven Nutzung der auftreffenden Sonnenenergie bereitzustellen.

Die Aufgabe der Erfindung wird durch ein Lamellendach mit den Merkmalen des Anspruchs 1 gelöst. Ausgehend von dem Lamellendach der eingangs genannten Art wird vorgeschlagen, dass die mindestens eine Lamelle, in oder an der Solarzellen zur Umwandlung von Sonnenenergie in elektrische Energie und/oder ein Sonnenkollektor zur Umwandlung von Sonnenenergie in thermische Energie angebracht sind oder integrale Bestandteile der Lamelle sind, aus jeweils einem Grundkörper aus Metall, vorzugsweise aus Aluminium, oder aus Kunststoff gebildet ist, dass die transparente Abdeckung an dem Grundkörper mittelbar oder unmittelbar angebracht ist und dass durch den Grundkörper und die transparente Abdeckung ein Hohlraum der Lamelle gebildet ist, wobei unter der Abdeckung die Solarzellen und/oder der Sonnenkollektor angeordnet sind.

Damit das Sonnenlicht die Solarzellen oder die Sonnenkollektoren erreicht, weist die Lamelle auf der in der geschlossenen Position zur Außenseite des Lamellendachs gerichteten Oberseite zumindest bereichsweise zumindest eine transparente Abdeckung auf, unter der die Solarzellen und/oder der Sonnenkollektor angeordnet sind.

Die auf das Lamellendach auftreffende Sonnenenergie kann so durch die Solarzellen in elektrische Energie oder durch den Sonnenkollektor in thermische Energie, beispielsweise zur Bereitstellung von Warmwasser, umgewandelt werden. Das Solardach ist vorzugsweise in einer Südrichtung ausgerichtet, so dass über einen langen Tageszeitraum die Sonne auf die Dachfläche einstrahlt. Beispielsweise kann eine südlich ausgerichtete Terrasse wetterdicht überdacht und das Dach bei Bedarf geöffnet werden, so dass Sonnenlicht in regulierbarer Intensität auf die Terrasse fällt. In geschlossener Position sind die Solarzellen oder die Sonnenkollektoren geeignet und abschattungsfrei zur Sonne hin ausgerichtet, um einen hohen Wirkungsgrad zu erreichen. Aber auch in geöffneter Position erreicht ein Großteil der Sonnenstrahlung die Solarzellen oder Sonnenkollektoren, so dass auch in dieser Lamellenstellung die Sonnenenergie genutzt werden kann. Ein weiterer Vorteil der Erfindung besteht darin, dass ein Teil der eingestrahlten Sonnenenergie zur Strom- oder Warmwassergewinnung genutzt wird und somit nicht zur Aufheizung des Lamellendachs oder des überdachten Raums beiträgt.

Eine auch bei großen Spannweiten des Daches ausreichende Stabilität des Lamellendachs wird dadurch erreicht, dass die Lamelle aus jeweils einem Grundkörper aus Metall, vorzugsweise aus Aluminium, oder aus Kunststoff gebildet ist und dass die transparente Abdeckung an dem Grundkörper mittelbar oder unmittelbar angebracht ist. Dabei kann eine dichte, dauerhafte und gleichzeitig einfach herzustellende Verbindung zwischen dem Grundkörper und der transparenten Abdeckung dadurch erreicht werden, dass die transparente Abdeckung durch eine umlaufende Klebung mit dem Grundkörper verbunden ist.

Gemäß einer vorteilhaften Weiterbildung wird vorgeschlagen, dass die Lamelle auf beiden Oberseiten zumindest bereichsweise jeweils zumindest eine transparente Abdeckung aufweist. Die transparente Abdeckung ist dabei Teil der Außenhülle der Lamelle und bietet eine glatte, robuste und leicht zu reinigende Oberfläche, welche die darunter liegenden Solarzellen und Sonnenkollektoren vor mechanischen Belastungen, beispielsweise durch Hagel, schützt.

Vorteilhaft kann die transparente Abdeckung aus einem transparenten Kunststoff oder aus Glas, insbesondere aus einem Verbundsicherheitsglas oder einem vorgespannten Glas, hergestellt sein. Transparenter Kunststoff bietet den Vorteil eines geringen Gewichtes. Glas führt zu einer deutlichen Versteifung der Lamellen, wodurch die Belastbarkeit des Lamellendachs, beispielsweise durch Schnee, erhöht wird. Durch Verwendung eines vorgespannten Glases beziehungsweise eines Verbundsicherheitsglases können die relevanten Normen für eine Überkopfverglasung eingehalten werden. Glas bietet den weiteren Vorteil einer harten und kratzfesten Oberfläche.

Optische Verluste an der transparenten Abdeckung können dadurch verringert werden, dass die transparente Abdeckung einseitig oder beidseitig mit einer antireflektiven Beschichtung und/oder mit einer antireflektiv wirkenden Strukturierung und/oder mit einer Schmutz abweisenden Beschichtung und/oder mit einer Schmutz abweisenden Strukturierung und/oder mit einer Infrarotstrahlung reflektierenden Beschichtung versehen ist.

Bei einer Glasabdeckung wird bei senkrechtem Einfall ca. 4% der auftreffenden Sonnenstrahlung an jeder Oberseite der Glasabdeckung reflektiert und geht somit für die Energiegewinnung verloren. Durch eine geeignete antireflektive Beschichtung oder Strukturierung kann dieser reflektierte Anteil reduziert und somit der Wirkungsgrad der Energiegewinnung verbessert werden. Besonders vorteilhaft wirkt sich dabei aus, dass bei schrägem Lichteinfall, wie er bei einem Lamellendach in Abhängigkeit von der Drehposition der Lamellen häufig zu erwarten ist, der Anteil der reflektierten Strahlung und damit der mögliche Energiegewinn durch eine entsprechende antireflektive Beschichtung bzw. Strukturierung deutlich ansteigen.

Die Verschmutzung des Lamellendachs ist stark abhängig von dessen Aufstellungsort und kann unter ungünstigen Umständen zu einer Reduzierung der Transmission der transparenten Abdeckung und somit des Wirkungsgrads der Energiegewinnung um mehr als 15% führen. Durch eine Schmutz abweisende Beschichtung oder Strukturierung (Lotus-Effekt) kann die Verschmutzung zumindest reduziert werden, was sich positiv auf den Wirkungsgrad auswirkt.

Insbesondere für Sonnenkollektoren ist die Verwendung einer IR-reflektierenden Beschichtung der transparenten Abdeckung vorteilhaft. Eine solche IR-reflektierende Schicht kann im sichtbaren Wellenlängenbereich transparent ausgeführt sein. Damit kann das Sonnenlicht, in dessen Wellenlängenbereich sich das Strahlungsmaximum der Sonne befindet, ungehindert zu dem Sonnenkollektor gelangen und diesen und den in dem Sonnenkollektor strömenden Wärmeträger aufheizen. Die von dem Sonnenkollektor in Abhängigkeit von seiner Temperatur emittierte Wärmestrahlung wird durch die IR-reflektierende Beschichtung zurück zu dem Sonnenkollektor reflektiert, so dass Energieverluste auf Grund von Wärmestrahlung deutlich reduziert werden können. Wegen der vergleichsweise niedrigen Temperatur des Sonnenkollektors ist die emittierte Strahlung langwellig, so dass durch eine geeignete Wahl der IR- reflektierenden Beschichtung die Reflektionsbande so gelegt werden kann, dass ein Großteil der Sonnenstrahlung die Beschichtung und die transparente Abdeckung ungehindert passieren kann, während die langwellige, von dem Sonnenkollektor emittierte Strahlung reflektiert wird. Die IR-reflektierende Beschichtung kann dabei außen oder, vor mechanischer Verletzung geschützt, innen auf der transparenten Abdeckung aufgebracht sein.

Ein einfacher Aufbau einer elektrischen Strom erzeugenden Lamelle kann dadurch realisiert werden, dass Solarzellen als Dünnschicht-Solarzellen direkt auf die transparente Abdeckung aufgebracht sind oder als kristalline Solarzellen über einen Laminationsprozess mit der transparenten Abdeckung verbunden sind und dass die transparente Abdeckung in Baueinheit mit zumindest den Solarzellen und mit den Solarzellen verbundenen elektrischen Anschlüssen ein Photovoltaikmodul bildet. Ein solches nach bekannten Fertigungsverfahren hergestelltes Photovoltaikmodul kann als Baueinheit auf den Grundkörper der Lamelle montiert werden. Da bei dieser Anordnung die Solarzellen dicht an der Oberfläche der Lamelle angeordnet sind kann eine Abschattung durch den Grundkörper vermieden werden.

Entsprechend einer alternativen Ausgestaltungsvariante der Erfindung kann es vorgesehen sein, dass ein oder mehrere Photovoltaikmodule als separate Baueinheiten in dem Grundkörper der Lamelle angeordnet sind. Die Photovoltaikmodule liegen dabei, geschützt durch den Grundkörper und die transparente Abdeckung, innerhalb der Lamelle. Vorteilhaft ist hierbei, dass die Photovoltaikmodule nicht als entsprechend der Ausdehnung einer Lamelle lange und schmale Streifen gefertigt werden müssen, sondern dass mehrere kürzere Photovoltaikmodule in einer Lamelle angeordnet werden können. Solche kürzeren Photovoltaikmodule lassen sich auf existierenden Fertigungsstraßen herstellen, wobei durch die Verwendung mehrerer Photovoltaikmodule je Lamelle eine entsprechend hohe Belegung des Lamellendachs mit Solarzellen erreicht werden kann.

Ein einfacher und kostengünstiger Sonnenkollektor kann dadurch erhalten werden, dass zur Bildung des Sonnenkollektors an dem Grundkörper Absorberkanäle zum Durchfluss eines flüssigen Wärmeträgers einteilig angeformt sind. Der Sonnenkollektor muss somit nicht als separate Baueinheit zur Verfügung gestellt werden, sondern kann kostengünstig direkt mit dem Grundkörper gefertigt werden.

Entsprechend einer besonders bevorzugten Ausgestaltungsvariante kann es vorgesehen sein, dass in der Lamelle ein Sonnenkollektor mit einem parallel zur Längserstreckung der Lamelle verlaufenden Absorberrohr zum Durchfluss eines flüssigen Wärmeträgers und einteilig an dem Absorberrohr angeformten Absorberflächen angeordnet ist. Der Sonnenkollektor kann dabei so in dem Grundkörper der Lamelle angebracht sein, dass nur ein geringer thermischer Kontakt zwischen dem Sonnenkollektor und dem Grundkörper besteht. Dadurch kann die Wärmeleitung von dem Sonnenkollektor an die Umgebung reduziert und dessen Wirkungsgrad entsprechend erhöht werden. Die Absorberflächen ermöglichen eine großflächige Absorption der in die Lamelle einfallenden Sonnenstrahlung.

Der Wirkungsgrad des Sonnenkollektors kann weiterhin dadurch erhöht werden, dass das Absorberrohr und/oder die an das Absorberrohr angeformten Absorberflächen mit einer selektiven Absorberschicht mit einer hohen Absorption für Sonnenstrahlung und einer geringen Emission für Wärmestrahlung beschichtet sind und/oder dass zumindest Bereiche des mit Absorberkanälen versehenen Grundkörpers mit einer solchen selektiven Absorberschicht beschichtet sind. Durch die selektive Absorberschicht wird die Absorption von Sonnenlicht erhöht und gleichzeitig die Emission der langwelligen, von der Temperatur des Absorbers abhängigen Wärmestrahlung reduziert.

Höchste Wirkungsgrade können damit erreicht werden, dass in der Lamelle ein oder mehrere Vakuumröhrenkollektoren angeordnet sind. Solche Vakuumröhrenkollektoren können als Standardkomponenten bezogen und in den Lamellen angeordnet werden. Vakuumröhrenkollektoren bestehen aus einem Absorberrohr, in dem der flüssige Wärmeträger geführt ist, und einem das Absorberrohr umschließenden Glasrohr. Der Hohlraum zwischen dem Absorberrohr und dem Glasrohr ist evakuiert, wodurch die thermischen Verluste des Kollektors minimiert werden.

Ein zu den Vakuumröhrenkollektoren vergleichbares Prinzip der Effizienzsteigerung kann dadurch genutzt werden, dass der mit dem Grundkörper und der Abdeckung umschlossene Hohlraum der Lamelle vakuumdicht abgeschlossen ist und dass der Luftdruck in dem Hohlraum gegenüber dem Umgebungsdruck reduziert ist und/oder dass der Hohlraum mit einem Edelgas gefüllt ist. Die Wärmeleitung von einem in der Lamelle angeordneten Sonnenkollektor an die Umgebung kann dadurch deutlich reduziert werden, was sich positiv auf den Wirkungsgrad des Sonnenkollektors auswirkt. Als Edelgase können beispielsweise Argon oder Krypton verwendet sein.

Ein einfacher Anschluss eines Sonnenkollektors an den Wärmeträgerkreislauf kann dadurch ermöglicht werden, dass die Drehachse der Lamelle in der Mitte des Absorberrohres oder in der Mitte eines Vakuumröhrenkollektors verläuft. Vorteilhaft liegt bei dieser Anordnung der Schwerpunkt der Lamelle in oder zumindest nahe der Drehachse, was eine einfache Drehung der Lamellen des Lamellendachs mit geringem Kraftaufwand ermöglicht. Dies ist insbesondere bei großen Lamellendächern, bei denen eine Vielzahl von mit Sonnenkollektoren versehenen Lamellen gleichzeitig bewegt werden, relevant.

Der Anschluss der um die Drehachse drehbaren Lamelle an das starre Leitungsnetz des Wärmeträgerkreislaufs kann dadurch erfolgen, dass der Wärmeträger über jeweils eine um ihre Längsachse und in der Drehachse der Lamelle drehbare Rohrverbindung dem Sonnenkollektor zugeführt und abgeführt ist. Durch eine solche in sich drehende Rohrverbindung kann ein starres Rohr des Leitungsnetzes des Wärmeträgerkreislaufs mit einem drehbaren Rohr des Sonnenkollektors dicht verbunden werden.

Entsprechend einer Ausführungsform der Erfindung kann es vorgesehen sein, dass zumindest auf einer Seite der Lamelle eine Stellvorrichtung vorgesehen ist, dass die Stellvorrichtung einen Kipphebel und eine mit dem Kipphebel über ein Drehgelenk beweglich verbundene Anlenkung umfasst, dass der Kipphebel in der Drehachse der Lamelle drehbar gelagert und mit dem Grundkörper der Lamelle und/oder einem von einer der drehbaren Rohrverbindungen zu dem Sonnenkollektor führenden Anschlussrohr starr verbunden ist und dass über eine lineare Bewegung der Anlenkung der Kipphebel, die Lamelle und das Anschlussrohr um die Drehachse der Lamelle drehbar ist. Die Stellvorrichtung ermöglicht das Öffnen und Schließen der Lamellen. Dazu kann die Linearbewegung der Anlenkung durch eine Handkurbel oder einen elektrischen Antrieb erfolgen. Der Kipphebel kann so ausgebildet sein, dass sich die Drehachse der Lamelle außerhalb der Lamelle befindet. Dadurch kann die Lamelle vollständig aus der Dachebene um die Drehachse geschwenkt werden. Eine hohe Stabilität des Lamellendachs in geöffneter Position kann erreicht werden, wenn auf beiden Seiten der Lamellen eine solche Stellvorrichtung vorgesehen ist.

Um einen sicheren Ablauf von Regenwasser zu gewährleisten kann es vorgesehen sein, dass die Dachebene des Lamellendachs senkrecht zur Drehachse der Lamellen ein Gefälle aufweist oder dass die Dachebene senkrecht zur Drehachse der Lamellen horizontal und parallel zur Drehachse der Lamellen mit einem Gefälle ausgerichtet ist und die einzelnen Lamellen in ihrer geschlossenen Position ein Gefälle senkrecht ihrer Drehachse aufweisen.

Eine ausreichende Selbstreinigung des Lamellendachs zu erreichen kann dadurch gewährleistet werden, dass das Gefälle der Dachebene oder der einzelnen Lamellen senkrecht zu ihren Drehachsen größer als 10°, vorzugsweise größer als 15°, ist.

Ein hoher Wirkungsgrad bei der Umwandlung von Sonnenenergie in nutzbare Energie sowie eine gute Regulierbarkeit der durchgelassenen Sonnenstrahlung kann dadurch ermöglicht werden, dass das Lamellendach in einer dem Sonnenverlauf zugewandten Ausrichtung montiert ist und dass beim Öffnen der Lamellen die dem Sonnenverlauf zugewandten Seiten der Lamellen nach oben aus der Dachebene gedreht werden.

Dabei kann es vorgesehen sein, dass die Lamellen über die vollständig geöffnete Drehposition hinaus drehbar sind, vorzugsweise dass die Lamellen, ausgehend von der geschlossenen Position, bis zu einem Winkel von annähernd 180° drehbar sind. Durch die über die vollständig geöffnete Position weiter drehbaren Lamellen wird eine verbesserte Regulierung der Sonneneinstrahlung in den abgeschatteten Bereich unter dem Lamellendach ermöglicht. Vorteilhaft können dabei beidseitig mit einer transparenten Abdeckung versehene Lamellen verwendet werden, hinter denen beispielsweise beidseitig ausgerichtete Absorber für die eingesetzten Sonnenkollektoren oder bifacialen Solarzellen, welche auf beide Seiten der Solarzellen auffallendes Licht in Strom umwandeln, angeordnet sind.

Die Erfindung wird im Folgenden anhand eines in den Figuren dargestellten Ausführungsbeispiels näher erläutert. Es zeigen:
- Figur 1: ein Lamellendach als Überdachung einer Terrasse,
- Figur 2: einen Ausschnitt eines Lamellendachs in geschlossener Drehposition,
- Figur 3: einen Ausschnitt eines Lamellendachs in geöffneter Drehposition,
- Figur 4: eine Lamelle mit einem Photovoltaikmodul,
- Figur 5: eine Lamelle mit einer Kombination aus einem Photovoltaikmodul und einem Sonnenkollektor.

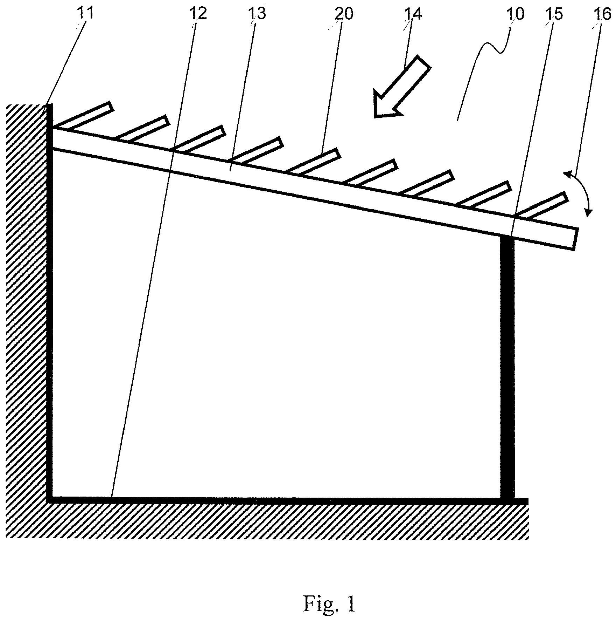

Figur 1 zeigt ein Lamellendach 10 als Überdachung einer Terrasse 12. Um ihre Längserstreckung drehbare Lamellen 20 sind in einem Rahmenprofil 13 gehalten, welches auf einer Seite an einer Hauswand 1 montiert ist und auf der gegenüberliegenden Seite auf Stützpfosten 15 aufliegt. Die mögliche Drehbewegung 16 der Lamellen 20 ist durch einen Doppelpfeil dargestellt. Das Lamellendach 10 ist nach Süden hin ausgerichtet, so dass Sonnenstrahlung 14 auf das Lamellendach 10 fällt.

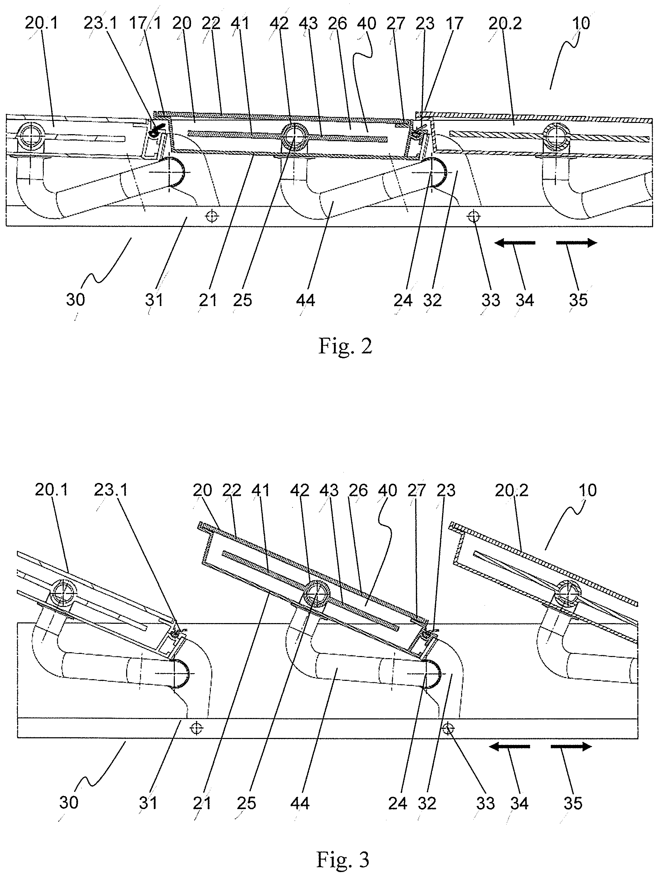

Die Lamellen 20 sind mit Hilfe einer in Figur 2 gezeigten Stellvorrichtung 30 um eine parallel zu ihrer Längserstreckung verlaufende und ebenfalls in Figur 2 gezeigte Drehachse 24 zwischen einer geschlossenen Position und einer beliebigen geöffneten Drehposition drehbar. In der geschlossenen Position überlappen sich die Lamellen 20 und bilden eine wasserdichte Überdachung. Durch Öffnen der Lamellen 20 und Wahl einer geeigneten Drehposition kann der Einfall der Sonnenstrahlung 14 auf die Terrasse 12 reguliert werden.

Das Lamellendach 10 hat vorteilhaft ein Gefälle von mindestens 15°, um die Selbstreinigung durch abfließendes Regenwasser zu unterstützen. Alternativ können die einzelnen Lamellen zueinander ein Quergefälle von beispielsweise 15° aufweisen. Das Regenwasser kann dann in Längsrichtung der Lamellen 20 nach links und rechts zu Regenrinnen geleitet werden. Bei dieser Ausführung kann das Lamellendach 10 die Terrasse 12 horizontal überspannen.

Figur 2 zeigt einen Ausschnitt eines Lamellendachs 10 in geschlossener Drehposition in einer Schnittdarstellung. Es sind drei baugleiche Lamellen 20, 20.1, 20.2 gezeigt, die nachfolgende Beschreibung bezieht sich daher auf die mittlere Lamelle 20.

Die Lamelle 20 ist aus einem Grundkörper 21 und einer transparenten Abdeckung 22 aufgebaut. Die Lamellen 20, 20.1, 20.2 liegen in Überlappungsbereichen 17, 17.1 entlang ihrer langen Seiten gegenseitig auf, wobei der Übergang durch jeweils ein Dichtelement 23, 23.1 abgedichtet ist. Die transparente Abdeckung 22 ist durch eine umlaufende Klebung 27 wasserdicht mit dem Grundkörper 21 verbunden. In einem durch den Grundkörper 21 und die transparente Abdeckung 22 gebildeten Hohlraum 26 der Lamelle 20 ist ein Sonnenkollektor 40, bestehend aus einem Absorberrohr 42 und zwei einteilig an das Absorberrohr 42 angeformten Absorberflächen 41, 43, angeordnet. Das Absorberrohr 42 ist an ein winklig geformtes Anschlussrohr 44 angeschlossen. Ein Kipphebel 32 ist starr mit dem Anschlussrohr 44 und dem Grundkörper 21 der Lamelle 20 verbunden. Der Kipphebel 32 ist weiterhin über ein Drehgelenk 33 an einer Anlenkung 31 montiert und bildet mit diesem eine Stellvorrichtung 30 für die Lamelle 20. Die Anlenkung 31 kann linear entsprechend der dargestellten Bewegungsrichtungen 34, 35 bewegt werden. Eine Drehachse 24 der Lamelle 20 verläuft außerhalb der Lamelle 20 parallel zu deren Längserstreckung.

Der Sonnenkollektor 40 dient der thermischen Nutzung der Sonnenenergie. Auf das Lamellendach 10 auftreffende Sonnenstrahlung 14 gelangt über die transparente Abdeckung 22 zu dem Sonnenkollektor 40 und wird dort von dem Absorberrohr 42 und den Absorberflächen 41, 43 absorbiert. Dadurch wird ein flüssiger Wärmeträger, der dem Absorberrohr 42 über das Anschlussrohr 44 zugeführt wird, aufgeheizt. Als Wärmeträger kann direkt das aufzuheizende Brauch- oder Heizungswasser vorgesehen sein oder es kann ein geschlossener Primärkreislauf vorgesehen sein, aus dem der Wärmeträger seine Energie in einem nicht dargestellten Wärmetauscher an das in einem Sekundärkreislauf fließende Brauch- oder Heizungswasser abgibt.

In dem gezeigten Ausführungsbeispiel ist der Hohlraum 26 der Lamelle 20 bei vermindertem Druck mit einem Edelgas gefüllt, um Energieverluste durch Wärmeleitung und Konvektion zu vermeiden. Die transparente Abdeckung 22 ist aus einem vorgespannten Glas (Einscheiben-Sicherheitsglas ESG) gefertigt, um eine ausreichende Stabilität, beispielsweise bei einer hohen Schneebelastung des Lamellendachs 10, zu gewährleisten. Um den Wirkungsgrad der Energiegewinnung zu verbessern ist die transparente Abdeckung 22 beidseitig mit einer antireflektiv wirkenden Beschichtung versehen, wodurch Reflektionsverlust an den Glasoberflächen vermindert werden und ein höherer Anteil der auftreffenden Sonnenstrahlung 14 zu dem Sonnenkollektor 40 gelangt. Das Absorberrohr 42 und die Absorberflächen 41, 43 sind mit einer selektiven Absorberschicht mit einem hohen Absorptionsgrad im Wellenlängenbereich der Sonnenstrahlung 13 und einem niedrigen Emissionsgrad in dem von der Temperatur des Sonnenkollektors 40 abhängigen Wellenlängenbereich beschichtet. Die Sonnenstrahlung 14 wird somit bestmöglich absorbiert, während die Emission von Wärmestrahlung durch den Sonnenkollektor 40 vermindert wird, was sich positiv auf den Wirkungsgrad auswirkt.

Zum Öffnen des Lamellendachs 10 wird die Anlenkung 31 der Stellvorrichtung 30 entlang der ersten Bewegungsrichtung 34 linear bewegt. Über das Drehgelenk 33 wird dadurch der Kipphebel 32 um die Drehachse 24 gedreht. Dabei werden auch die mit dem Kipphebel 32 verbundene Lamelle 20 und das Anschlussrohr 44 um die Drehachse 24 gedreht und die Lamelle 20 wird aus der Dachebene geschwenkt.

Der Wärmeträger wird dem Anschlussrohr 44 über eine nicht dargestellte, in der Drehachse 24 der Lamelle 20 drehbare Rohrverbindung zugeführt. Die Rohrverbindung ist dazu in der Drehachse 24 der Lamelle 20 angeordnet und ermöglicht eine dichte Verbindung des Anschlussrohres 44 mit dem ebenfalls nicht dargestellten starren Leitungsnetz des Wärmeträgers. Der Wärmeträger wird auf der gegenüberliegenden Seite der Lamelle 20 durch ein vergleichbares Anschlussrohr und eine entsprechende Rohrverbindung an das Leitungsnetz des Wärmeträgers zurückgeführt.

In einer weiteren Ausführung der Erfindung kann eine alternative Drehachse 25 vorgesehen sein, welche in der Mitte des Absorberrohres 42 verläuft. Die Stellvorrichtung 30 ist dabei so anzupassen, dass eine Drehung der Lamellen 20 um diese alternative Drehachse 25 ermöglicht wird. Bei dieser Ausführungsvariante kann auf das Anschlussrohr 44 verzichtet und der Wärmeträger direkt über eine drehbare Rohrverbindung in das Absorberrohr 42 eingespeist werden.

Figur 3 zeigt einen Ausschnitt des Lamellendachs 10 in geöffneter Drehposition der Lamellen 20, 20.1, 20.2. Es sind die gleichen Bezeichner wie zu Figur 2 eingeführt verwendet.

Im Vergleich zu der in Figur 2 gezeigten geschlossenen Drehposition ist die Anlenkung 31 der Stellvorrichtung 30 entlang der ersten Bewegungsrichtung 34 linear verschoben. Dadurch sind der Kipphebel 32 und entsprechend die mit dem Kipphebel 32 verbundene Lamelle 20 und das Anschlussrohr 44 um die Drehachse 24 der Lamelle 20 gedreht. Auf die gleiche Weise sind die zweite Lamelle 20.1 und die dritte Lamelle 20.2 aus der Ebene des Lamellendachs 10 gedreht, so dass sich Öffnungen zwischen den Lamellen 20, 20.1, 20.2 bilden, durch die Sonnenlicht in den durch das Lamellendach 10 überdachten Raum eindringen kann. Durch die Wahl des Kippwinkels der Lamellen 20, 20.1, 20.2 kann der Lichteinfall in den überdachten Raum reguliert werden.

In dem gezeigten Ausführungsbeispiel sind der Grundkörper 21 aus Aluminium und die transparente Abdeckung 22 aus vorgespanntem Glas hergestellt. Alternativ dazu kann der Grundkörper 21 auch aus einem anderen Metall oder aus Kunststoff gefertigt sein, während für die transparente Abdeckung 22 ein transparenter Kunststoff verwendet werden kann. Weiterhin kann in den Hohlraum 26 der Lamelle 20 ein Getier eingebracht sein, um eindringende Gasmoleküle zu binden und so ein bestehendes Vakuum in der Lamelle 20 aufrecht zu erhalten.

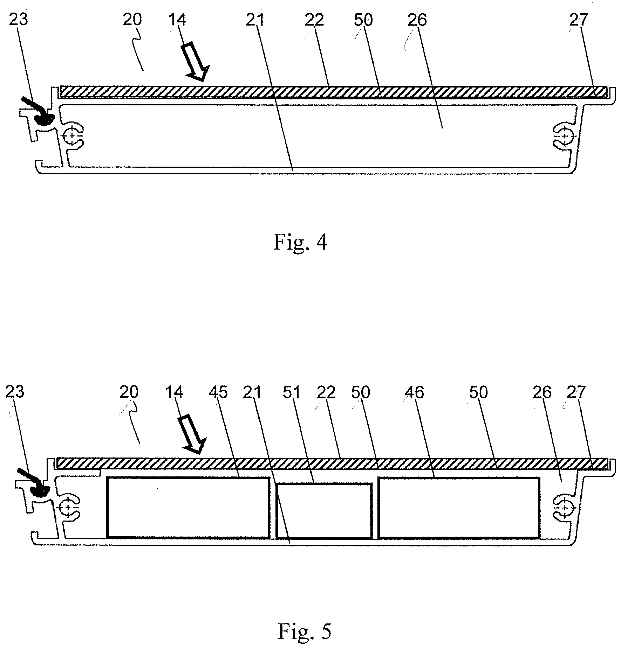

Figur 4 zeigt eine Lamelle 20 mit einem Photovoltaikmodul 50. Das Photovoltaikmodul 50 liegt als Baueinheit, bestehend aus der transparenten Abdeckung 22, den in der maßstäblichen Darstellung auf Grund der geringen Dicke nicht gezeigten Solarzellen, einer rückseitigen Isolierung sowie elektrischen Anschlüssen vor. Das Photovoltaikmodul 50 ist mit einer umlaufenden Klebung 27 auf dem Grundkörper 21 angebracht. Die Sonnenstrahlung 14 trifft unmittelbar auf die Oberseite der Lamelle 20.

Die Solarzellen sind als Dünnschicht-Solarzellen in ihrem Schichtaufbau direkt auf die transparente Abdeckung 22 aufgebracht. In dem vorliegenden Ausführungsbeispiel sind CIGS-Zellen (CulnGaSe2) mit einem entsprechend hohen Wirkungsgrad verwendet, es können aber auch beliebige andere Dünnschicht-Zelltypen verwendet werden. Alternativ dazu kann das Photovoltaikmodul mit kristallinen Solarzellen, welche durch einen Laminationsprozess mit der transparenten Abdeckung 22 verbunden sind, aufgebaut sein.

Das Photovoltaikmodul 50 erstreckt sich über die gesamte Länge der Lamelle 20. Alternativ können mehrere kürzere Photovoltaikmodule 50 entlang der Oberseite der Lamelle 20 so angeordnet sein. Kürzere Photovoltaikmodule 50 bieten den Vorteil, dass sie in bestehenden Fertigungslinien für Photovoltaikmodule 50, bei denen die maximale Länge der Photovoltaikmodule 50 begrenzt ist, hergestellt werden können.

Vorteilhaft bei dem gezeigten Aufbau ist, dass das Photovoltaikmodul 50 direkt auf der Oberseite der Lamelle 20 angebracht ist, wo von einer maximalen Sonneneinstrahlung ohne Abschattung, beispielsweise durch den Grundkörper 21 , ausgegangen werden kann.

Figur 5 zeigt eine Lamelle 20 mit einer Kombination aus einem Photovoltaikmodul 50 und einem Sonnenkollektor 40.

Die Lamelle 20 ist, wie bereits beschrieben, aus einem einen Hohlraum 26 umschließenden Grundkörper 21, einer transparenten Abdeckung 22 und einem Dichtelement 23 aufgebaut.

Das Photovoltaikmodul 50 ist als teiltransparentes Dünnschichtmodul ausgeführt. Bei einem solchen teiltransparenten Dünnschichtmodul dringt ein Teil der auftreffenden Sonnenstrahlung 14 in den darunter liegenden Hohlraum 26 der Lamelle 20. Die elektrischen Anschlüsse des Photovoltaikmoduls sind in einer einteilig an den Grundkörper 21 angeformten Anschlussdose 51 zusammengeführt.

Der Sonnenkollektor 40 ist aus zwei Absorberkanälen 45, 46 gebildet, welche ebenfalls einteilig an den Grundkörper 21 angeformt sind und durch die der Wärmeträger fließt.

Die Lamelle 20 ermöglicht damit sowohl die Stromgewinnung durch das Photovoltaikmodul 50 wie auch die Bereitstellung von Warmwasser durch den Sonnenkollektor 40. Durch das einteilige Ausformen der Absorberkanäle 45, 46 und der Anschlussdose 51 wird eine kostengünstige Herstellung ermöglicht. Um den Wirkungsgrad zu verbessern ist die Oberfläche der transparenten Abdeckung 22 mit einer in ihrer Wirkung bereits beschriebenen antireflektiven Beschichtung und die Absorberkanäle 45, 46 mit einer selektiven Absorberschicht versehen.

In einer alternativen Ausführungsform kann auf das Photovoltaikmodul 50 und die Anschlussdose 51 verzichtet und die Lamelle 20 ausschließlich für die thermische Nutzung der Sonnenenergie ausgelegt sein. Dem Sonnenkollektor 40 wird so ein größerer Anteil der auftreffenden Sonnenstrahlung 14 zugeführt. Durch die einteilige Anformung der Absorberkanäle 45, 46 wird ein sehr kostengünstiger Aufbau einer Lamelle 20 mit einem Sonnenkollektor 40 ermöglicht. Dabei tragen die Absorberkanäle 45, 46 zur zusätzlichen Versteifung der Lamelle 20 bei.

In der gezeigten Ausführungsvariante der Erfindung werden alle Lamellen 20 des Lamellendachs 10 gleich angesteuert und sind entsprechend gleich ausgerichtet.

Alternativ dazu kann es vorgesehen sein, dass einzelne Lamellengruppen getrennt angesteuert und ausgerichtet werden können. Dies ermöglicht es beispielsweise, einen Teil des Lamellendachs 10 zu öffnen, während ein anderer Teil des Lamellendachs 10 geschlossen bleibt.

In einer weiteren Ausführungsvariante der Erfindung können einzelne Lamellen 20 oder Gruppen von Lamellen 20 transparent und ohne Solarzellen beziehungsweise Sonnenkollektoren ausgeführt sein. Dies ist beispielsweise möglich, wenn an beiden Oberseiten der Lamellen 20 transparente Abdeckungen 22 vorgesehen sind. Solche transparenten Lamellen 20 lassen auch in geschlossener Stellung des Lamellendachs 10 Licht in den überdachten Raum dringen.

Entsprechend einer weiteren Ausführungsvariante der Erfindung kann es vorgesehen sein, dass ein Teil der Lamellen 20 eines Lamellendachs 10 mit Sonnenkollektoren 40 und ein Teil mit Solarzellen versehen ist. Ein solches Lamellendach 10 ermöglicht sowohl die thermische Nutzung der Sonnenenergie wie auch der Stromgewinnung.

## Patentansprüche

1. Lamellendach (10) mit Lamellen (20), und mit einer Stellvorrichtung (30) zur Drehung der Lamellen (20) um eine parallel zu ihrer Längserstreckung verlaufenden Drehachse (24) zwischen einer geschlossenen und einer geöffneten Drehposition, wobei die Lamellen (20) in der geschlossenen Drehposition in Überlappungsbereichen (17, 17.1) entlang ihrer Längskanten gegenseitig aufliegen und/oder durch Dichtelemente (23, 23.1) oder ineinander greifende Leitsysteme einander zugeordnet sind und wobei die Lamellen (20) durch die Stellvorrichtung (30) in Drehpositionen bis zur vollständig geöffneten Drehposition einstellbar sind,
wobei Solarzellen zur Umwandlung von Sonnenenergie in elektrische Energie und/oder ein Sonnenkollektor (40) zur Umwandlung von Sonnenenergie in thermische Energie in oder an zumindest einer der Lamellen (20) angebracht sind oder integrale Bestandteile der Lamelle (20) sind, und wobei die Lamelle (20) auf der in der geschlossenen Position zur Außenseite des Lamellendachs (10) gerichteten Oberseite zumindest bereichsweise zumindest eine transparente Abdeckung (22) aufweist,
**dadurch gekennzeichnet,**
**dass** die Lamelle (20) aus jeweils einem Grundkörper (21) aus Metall, vorzugsweise aus Aluminium, oder aus Kunststoff gebildet ist, dass die transparente Abdeckung (22) an dem Grundkörper (21) mittelbar oder unmittelbar angebracht ist und dass durch den Grundkörper (21) und die transparente Abdeckung (22) ein Hohlraum (26) der Lamelle (20) gebildet ist, wobei unter der Abdeckung (22) die Solarzellen und/oder der Sonnenkollektor (40) angeordnet sind.

2. Lamellendach (10) nach Anspruch 1,
**dadurch gekennzeichnet,**
**dass** die Lamelle (20) auf beiden Oberseiten zumindest bereichsweise jeweils zumindest eine transparente Abdeckung (22) aufweist.

3. Lamellendach (10) nach Anspruch 1 oder 2,
**dadurch gekennzeichnet,**
**dass** die transparente Abdeckung (22) aus einem transparenten Kunststoff oder aus Glas, insbesondere aus einem Verbundsicherheitsglas oder einem vorgespannten Glas, hergestellt ist.

4. Lamellendach (10) nach einem der Ansprüche 1 bis 3,
**dadurch gekennzeichnet,**
**dass** die transparente Abdeckung (22) einseitig oder beidseitig mit einer antireflektiven Beschichtung und/oder mit einer antireflektiv wirkenden Strukturierung und/oder mit einer Schmutz abweisenden Beschichtung und/oder mit einer Schmutz abweisenden Strukturierung und/oder mit einer Infrarotstrahlung reflektierenden Beschichtung versehen ist.

5. Lamellendach (10) nach einem der Ansprüche 1 bis 4,
**dadurch gekennzeichnet,**
**dass** die transparente Abdeckung (22) durch eine umlaufende Klebung (27) mit dem Grundkörper (21) verbunden ist.

6. Lamellendach (10) nach einem der Ansprüche 1 bis 5,
**dadurch gekennzeichnet,**
**dass** Solarzellen als Dünnschicht-Solarzellen direkt auf die transparente Abdeckung (22) aufgebracht sind oder als kristalline Solarzellen über einen Laminationsprozess mit der transparenten Abdeckung (22) verbunden sind und dass die transparente Abdeckung (22) in Baueinheit mit zumindest den Solarzellen und mit den Solarzellen verbundenen elektrischen Anschlüssen ein Photovoltaikmodul (50) bildet.

7. Lamellendach (10) nach einem der Ansprüche 1 bis 6,
**dadurch gekennzeichnet,**
**dass** ein oder mehrere Photovoltaikmodule (50) als separate Baueinheiten in dem Grundkörper (21) der Lamelle (20) angeordnet sind.

8. Lamellendach (10) nach einem der Ansprüche 1 bis 7,
**dadurch gekennzeichnet,**
**dass** zur Bildung des Sonnenkollektors (40) an dem Grundkörper (21) Absorberkanäle (45, 46) zum Durchfluss eines flüssigen Wärmeträgers einteilig angeformt sind.

9. Lamellendach (10) nach einem der Ansprüche 1 bis 8,
**dadurch gekennzeichnet,**
**dass** in der Lamelle (20) ein Sonnenkollektor (40) mit einem parallel zur Längserstreckung der Lamelle (20) verlaufenden Absorberrohr (42) zum Durchfluss eines flüssigen Wärmeträgers und einteilig an dem Absorberrohr (42) angeformten Absorberflächen (41, 43) angeordnet ist.

10. Lamellendach (10) nach Anspruch 9,
**dadurch gekennzeichnet,**
**dass** das Absorberrohr (42) und/oder die an das Absorberrohr (42) angeformten Absorberflächen (41, 43) mit einer selektiven Absorberschicht mit einer hohen Absorption für Sonnenstrahlung und einer geringen Emission für Wärmestrahlung beschichtet sind und/oder dass zumindest Bereiche des mit Absorberkanälen (45, 46) versehenen Grundkörpers (21) mit einer solchen selektiven Absorberschicht beschichtet sind.

11. Lamellendach (10) nach einem der Ansprüche 1 bis 10,
**dadurch gekennzeichnet,**
**dass** in der Lamelle (20) ein oder mehrere Vakuumröhrenkollektoren angeordnet sind.

12. Lamellendach (10) nach einem der Ansprüche 1 bis 11,
**dadurch gekennzeichnet,**
**dass** der mit dem Grundkörper (21) und der Abdeckung (22) umschlossene Hohlraum (26) der Lamelle (20) vakuumdicht abgeschlossen ist und dass der Luftdruck in dem Hohlraum (26) gegenüber dem Umgebungsdruck reduziert ist und/oder dass der Hohlraum (26) mit einem Edelgas gefüllt ist.

13. Lamellendach (10) nach einem der Ansprüche 9 bis 12,
**dadurch gekennzeichnet,**
**dass** die Drehachse der Lamelle (20) in der Mitte des Absorberrohres (42) oder in der Mitte eines Vakuumröhrenkollektors verläuft.

14. Lamellendach (10) nach einem der Ansprüche 1 bis 13,
**dadurch gekennzeichnet,**
**dass** der Wärmeträger über jeweils eine um ihre Längsachse und in der Drehachse der Lamelle (20) drehbare Rohrverbindung dem Sonnenkollektor (40) zugeführt und abgeführt ist.

15. Lamellendach (10) nach einem der Ansprüche 1 bis 14,
**dadurch gekennzeichnet,**
**dass** zumindest auf einer Seite der Lamelle (20) eine Stellvorrichtung (30) vorgesehen ist, dass die Stellvorrichtung (30) einen Kipphebel (32) und eine mit dem Kipphebel (32) über ein Drehgelenk (33) beweglich verbundene Anlenkung (31) umfasst, dass der Kipphebel (32) in der Drehachse (24) der Lamelle (20) drehbar gelagert und mit dem Grundkörper (21) der Lamelle (20) und/oder einem von einer der drehbaren Rohrverbindungen zu dem Sonnenkollektor (40) führenden Anschlussrohr (44) starr verbunden ist und dass über eine lineare Bewegung der Anlenkung (31) der Kipphebel (32), die Lamelle (20) und das Anschlussrohr (44) um die Drehachse (24) der Lamelle (20) drehbar ist.

16. Lamellendach (10) nach einem der Ansprüche 1 bis 15,
**dadurch gekennzeichnet,**
**dass** die Dachebene des Lamellendachs (10) senkrecht zur Drehachse (24) der Lamellen (20) ein Gefälle aufweist oder dass die Dachebene senkrecht zur Drehachse (24) der Lamellen (20) horizontal und parallel zur Drehachse (24) der Lamellen (20) mit einem Gefälle ausgerichtet ist und die einzelnen Lamellen (20) in ihrer geschlossenen Position ein Gefälle senkrecht ihrer Drehachse (24) aufweisen.

17. Lamellendach (10) nach Anspruch 16,
**dadurch gekennzeichnet,**
**dass** das Gefälle der Dachebene oder der einzelnen Lamellen (20) senkrecht zu ihren Drehachsen (24) größer als 10°, vorzugsweise größer als 15°, ist.

18. Lamellendach (10) nach einem der Ansprüche 1 bis 17,
**dadurch gekennzeichnet,**
**dass** das Lamellendach (10) in einer dem Sonnenverlauf zugewandten Ausrichtung montiert ist und dass beim Öffnen der Lamellen (20) die dem Sonnenverlauf zugewandten Seiten der Lamellen (20) nach oben aus der Dachebene gedreht werden.

19. Lamellendach (10) nach einem der Ansprüche 1 bis 18,
**dadurch gekennzeichnet,**
**dass** die Lamellen (20) über die vollständig geöffnete Drehposition hinaus drehbar sind, vorzugsweise dass die Lamellen (20), ausgehend von der geschlossenen Position, bis zu einem Winkel von annähernd 180° drehbar sind.

## Claims

1. A slat roof (10) with slats (20) and with an adjusting device (30) for rotating the slats (20) about an axis of rotation (24) between a closed and an open rotational position, said rotational axis running parallel to the longitudinal extension of the slats, wherein in the closed rotational position, the slats (20) lie against one another in overlap regions (17, 17.1) along the longitudinal edges of the slats and/or are coupled to one another by means of sealing elements (23, 23.1) or guiding systems which engage into one another, and wherein the slats (20) can be adjusted into rotational positions up to the completely open rotational position by the adjusting device (30),
wherein solar cells for converting solar energy into electric energy and/or a solar collector (40) for converting solar energy into thermal energy are attached in or on at least one of the slats (20) or are integral components of the slat (20), and wherein the slat (20) has, in regions, at least one transparent cover (22) on the upper side oriented towards the outside of the slat roof (10) in the closed position,
**characterised in that**
the slat (20) is formed from a main body (21) made from metal, preferably from aluminium, or from plastic, **in that** the transparent cover (22) is mounted directly or indirectly on the main body (21) and **in that** a cavity (26) of the slat (20) is formed by the main body (21) and the transparent cover (22), wherein the solar cells and/or the solar collector (40) are arranged under the cover (22).

2. The slat roof (10) according to Claim 1,
**characterised in that**
the slat (20) has at least one transparent cover (22), at least in regions, on both upper sides.

3. The slat roof (10) according to Claim 1 or 2,
**characterised in that**
the transparent cover (22) is produced from a transparent plastic or glass, in particular from a laminated safety glass or a toughened glass.

4. The slat roof (10) according to one of Claims 1 to 3,
**characterised in that**
the transparent cover (22) is provided on one or both sides with an anti-reflective coating and/or with an anti-reflective acting structuring and/or with a dirt repellent coating and/or with a dirt repellent structuring and/or with an infrared radiation reflecting coating.

5. The slat roof (10) according to one of Claims 1 to 4,
**characterised in that**
the transparent cover (22) is connected to the main body (21) by means of a circumferential bonding (27).

6. The slat roof (10) according to one of Claims 1 to 5,
**characterised in that**
solar cells are mounted directly on the transparent cover (22) as thin-film solar cells, or are connected to the transparent cover (22) as crystalline solar cells by means of a lamination process, and **in that** the transparent cover (22) forms a photovoltaic module (50) in an assembly with at least the solar cells and the electrical connections connected with the solar cells.

7. The slat roof (10) according to one of Claims 1 to 6,
**characterised in that**
one or more photovoltaic modules (50) are arranged as separate components in the main body (21) of the slat (20).

8. The slat roof (10) according to one of Claims 1 to 7,
**characterised in that**
in order to form the solar collector (40) on the main body (21), absorber channels (45, 46) are integrally formed for passage of a fluid heat transfer medium.

9. The slat roof (10) according to one of Claims 1 to 8,
**characterised in that**
a solar collector (40), comprising an absorber pipe (42), extending parallel to the longitudinal extension of the slat (20) for the passage of a fluid heat transfer medium and absorber surfaces (41, 43) integrally formed on the absorber pipe (42), is arranged in the slat (20).

10. The slat roof (10) according to Claim 9,
**characterised in that**
the absorber pipe (42) and/or the absorber surfaces (41, 43) formed on the absorber pipe (42) are coated with a selective absorber coating with a high absorption for solar radiation and a low emission for thermal radiation and/or **in that** at least regions of the main body (21) provided with absorber channels (45, 46) is coated with such a selective absorber coating.

11. The slat roof (10) according to one of Claims 1 to 10,
**characterised in that**
one or more vacuum tube collectors are arranged in the slat (20).

12. The slat roof (10) according to one of Claims 1 to 11,
**characterised in that**
the cavity (26) of the slat (20) enclosed by the main body (21) and the cover (22) is sealed vacuum-tight, and **in that** the air pressure in the cavity (26) is reduced with respect to the ambient pressure and/or **in that** the cavity (26) is filled with an inert gas.

13. The slat roof (10) according to one of Claims 9 to 12,
**characterised in that**
the axis of rotation of the slat (20) extends in the centre of the absorber pipe (42) or in the centre of a vacuum tube collector.

14. The slat roof (10) according to one of Claims 1 to 13,
**characterised in that**
the heat transfer medium is respectively supplied to and discharged from the solar collector (40) via a pipe connection that is rotatable about the axis of rotation of the slat (20).

15. The slat roof (10) according to one of Claims 1 to 14,
**characterised in that**
an adjustment device (30) is provided on at least one side of the slat (20), **in that** the adjustment device (30) comprises a tilt lever (32) and a linkage (31) movably connected to the tilt lever (32) via a rotary joint (33), **in that** the tilt lever (32) is rotatably mounted in the axis of rotation (24) of the slat (20) and rigidly connected to the main body (21) of the slat (20) and/or to one of the connecting pipes (44) of the rotatable pipe connections leading to the solar collector (40) and **in that**, by means of a linear movement of the linkage (31) of the tilt lever (32), the slat (20) and the connecting pipe (44) can be rotated about the axis of rotation (24) of the slat (20).

16. The slat roof (10) according to one of Claims 1 to 15,
**characterised in that**
the roof-plane of the slat roof (10) has a slope perpendicular to the axis of rotation (24) of the slats (20) or **in that** the roof-plane is orientated with a slope perpendicular to the axis of rotation (24) of the slats (20), horizontal and parallel to the axis of rotation (24) of the slats (20), and in their closed position the individual slats (20) have a slope perpendicular to their axis of rotation (24).

17. The slat roof (10) according to Claim 16,
**characterised in that**
the slope of the roof-plane or the individual slats (20) perpendicular to the axis of rotation (24) is greater than 10°, preferably greater than 15°.

18. The slat roof (10) according to one of Claims 1 to 17,
**characterised in that**
the slat roof (10) is mounted in an orientation facing the path of the sun and **in that** when opening the slats (20) the sides of the slats (20) facing the path of the sun are rotated upwards out of the plane of the roof.

19. The slat roof (10) according to one of Claims 1 to 18,
**characterised in that**
the slats (20) can be rotated beyond the fully opened rotational position, preferably **in that**, starting from the closed position, the slats (20) can be rotated through an angle of approximately 180°.

## Revendications

1. Toit à lamelles (10) comprenant des lamelles (20) et comprenant un dispositif de réglage (30) pour la rotation des lamelles (20) autour d'un axe de rotation (24) s'étendant parallèlement à leur étendue longitudinale entre une position de rotation fermée et une position de rotation ouverte, dans lequel les lamelles (20), dans la position de rotation fermée, reposent mutuellement dans des zones de chevauchement (17, 17.1) le long de leurs arêtes longitudinales et/ou sont disposées les unes par rapport aux autres par le biais d'éléments d'étanchéité (23, 23.1) ou de systèmes de guidage imbriqués les uns dans les autres et dans lequel les lamelles (20) peuvent être réglées, par le biais du dispositif de réglage (30), dans des positions de rotation allant jusqu'à la position de rotation totalement ouverte,
dans lequel des cellules solaires destinées à transformer l'énergie solaire en énergie électrique et/ou un capteur solaire (40) destiné à transformer l'énergie solaire en énergie thermique sont appliqués dans ou au niveau d'au moins une des lamelles (20) ou forment partie intégrante des lamelles (20) et dans lequel la lamelle (20) présente, sur le côté supérieur orienté, dans la position fermée, vers le côté externe du toit à lamelles (10), au moins un recouvrement (22) transparent au moins par sections,
**caractérisé en ce**
**que** la lamelle (20) est respectivement formée d'un corps de base (21) en métal, de préférence en aluminium ou en plastique, **en ce que** le recouvrement transparent (22) est appliqué sur le corps de base (21) indirectement ou directement et **en ce qu'**une cavité (26) de lamelle (20) est formée par le biais du corps de base (21) et du recouvrement transparent (22), dans lequel les cellules solaires et/ou le capteur solaire (40) sont disposés sous le recouvrement (22).

2. Toit à lamelles (10) selon la revendication 1,
**caractérisé en ce que**
la lamelle (20) présente, sur les deux côtés supérieurs, respectivement, au moins un recouvrement (22) transparent au moins par sections.

3. Toit à lamelles (10) selon la revendication 1 ou 2,
**caractérisé en ce que**
le recouvrement transparent (22) est fabriqué à partir d'un plastique transparent ou de verre, notamment à partir d'un verre de sécurité feuilleté ou un verre trempé.

4. Toit à lamelles (10) selon une des revendications 1 à 3,
**caractérisé en ce que**
le recouvrement transparent (22) comprend, d'un côté ou des deux côtés, un revêtement antireflet et/ou une structuration à action antireflet et/ou un revêtement anti-salissures et/ou une structuration anti-salissures et/ou un revêtement réfléchissant le rayonnement infrarouge.

5. Toit à lamelles (10) selon une des revendications 1 à 4,
**caractérisé en ce que**
le recouvrement transparent (22) est relié par le biais d'un collage circulaire (27) avec le corps de base (21).

6. Toit à lamelles (10) selon une des revendications 1 à 5,
**caractérisé en ce que**
les cellules solaires sont appliquées sous la forme de cellules solaires en couches minces directement sur le recouvrement transparent (22) ou sont reliées avec le recouvrement transparent (22) sous forme de cellules solaires cristallines par le biais d'un processus de stratification et **en ce que** le recouvrement transparent (22) forme, d'un seul tenant avec au moins les cellules solaires et avec les raccords électriques reliés aux cellules solaires, un module photovoltaïque (50).

7. Toit à lamelles (10) selon une des revendications 1 à 6,
**caractérisé en ce que**
un ou plusieurs modules photovoltaïques (50) sont disposés sous forme de composants séparés dans le corps de base (21) des lamelles (20).

8. Toit à lamelles (10) selon une des revendications 1 à 7,
**caractérisé en ce que**
pour la formation du capteur solaire (40), des canaux d'absorbeur (45, 46) sont formés en une seule pièce sur le corps de base (21) pour la circulation d'un caloporteur fluide.

9. Toit à lamelles (10) selon une des revendications 1 à 8,
**caractérisé en ce que**
un capteur solaire (40) est disposé dans les lamelles (20) avec un tube d'absorbeur (42) s'étendant parallèle à l'étendue longitudinale des lamelles (20) pour la circulation d'un caloporteur fluide et des surfaces d'absorbeur (41, 43) formées en une seule pièce sur le tube d'absorbeur (42).

10. Toit à lamelles (10) selon la revendication 9,
**caractérisé en ce que**
le tube d'absorbeur (42) et/ou les surfaces d'absorbeur (41, 43) formées sur le tube d'absorbeur (42) sont revêtus avec une couche d'absorbeur sélective avec une absorption élevée pour le rayonnement solaire et une émission moindre pour le rayonnement thermique et/ou **en ce qu'**au moins certaines zones du corps de base (21) comprenant les canaux d'absorbeur (45, 46) sont revêtues avec une telle couche d'absorbeur sélective.

11. Toit à lamelles (10) selon une des revendications 1 à 10,
**caractérisé en ce que**
un ou plusieurs capteurs à tubes sous vide sont disposés dans les lamelles (20).

12. Toit à lamelles (10) selon une des revendications 1 à 11,
**caractérisé en ce que**
la cavité (26) des lamelles (20) enserrée par le corps de base (21) et le recouvrement (22) est fermée de manière étanche au vide et **en ce que** la pression de l'air dans la cavité (26) est réduite par rapport à la pression ambiante et/ou **en ce que** la cavité (26) est remplie d'un gaz noble.

13. Toit à lamelles (10) selon une des revendications 9 à 12,
**caractérisé en ce que**
l'axe de rotation des lamelles (20) s'étend au milieu du tube d'absorbeur (42) ou au milieu d'un capteur à tubes sous vide.

14. Toit à lamelles (10) selon une des revendications 1 à 13,
**caractérisé en ce que**
le caloporteur est alimenté et évacué par le biais d'un raccord de tuyau respectif du capteur solaire (40) pouvant tourner autour de son axe longitudinal et dans l'axe de rotation des lamelles (20).

15. Toit à lamelles (10) selon une des revendications 1 à 14,
**caractérisé en ce que**
un dispositif de réglage (30) est prévu au moins sur un côté des lamelles (20), **en ce que** le dispositif de réglage (30) comprend un levier basculant (32) et une articulation (31) reliée mobile avec le levier basculant (32) par le biais d'un pivot (33), **en ce que** le levier basculant (32) est placé rotatif dans l'axe de rotation (24) des lamelles (20) et est relié fixe au corps de base (21) des lamelles (20) et/ou un tuyau de raccordement (44) menant d'un des raccords de tuyau rotatifs au capteur solaire (40) et **en ce que**, par le biais d'un mouvement linéaire de l'articulation (31) de levier basculant (32), les lamelles (20) et le tuyau de raccordement (44) peuvent tourner autour de l'axe de rotation (24) des lamelles (20).

16. Toit à lamelles (10) selon une des revendications 1 à 15,
**caractérisé en ce que**
le plan de toit du toit à lamelles (10) présente, perpendiculairement à l'axe de rotation (24) des lamelles (20), une pente ou **en ce que** le plan de toit perpendiculaire à l'axe de rotation (24) des lamelles (20) est orienté à l'horizontale et parallèle à l'axe de rotation (24) des lamelles (20) avec une pente et les lamelles individuelles (20) présentent, dans leur position fermée, une pente perpendiculaire à leur axe de rotation (24).

17. Toit à lamelles (10) selon la revendication 16,
**caractérisé en ce que**
la pente du plan de toit ou des lamelles individuelles (20) perpendiculaire à leur axe de rotation (24) est supérieure à 10 °, de préférence supérieure à 15 °.

18. Toit à lamelles (10) selon une des revendications 1 à 17,
**caractérisé en ce que**
le toit à lamelles (10) est monté dans une orientation tournée vers le parcours du soleil et **en ce que**, lors de l'ouverture des lamelles (20), les côtés tournés vers le parcours du soleil des lamelles (20) sont tournées vers le haut depuis le plan de toit.

19. Toit à lamelles (10) selon une des revendications 1 à 18,
**caractérisé en ce que**
les lamelles (20) peuvent tourner sur l'ensemble de la position de rotation ouverte, de préférence **en ce que** les lamelles (20), en partant de la position fermée, peuvent tourner jusqu'à un angle de près de 180 °.
